# EUROPEAN PATENT APPLICATION

(11) **EP 1 616 937 A1**
(43) Date of publication of application: **18.01.2006**
(21) Application number: 04425522.2
(22) Date of filing: 14.07.2004
(51) Int. Cl.: C12M 1/02, C12G 1/022

(54) **Fermenter and fermentation process**

(71) Applicant: De Silla S.p.A., 72025 Sandonacci (BR) (IT)
(72) Inventor: De Silla, Cosimo, 72025 Sandonaci (BR) (IT); De Silla, Nicola, 72025 Sandonaci (BR) (IT)
(74) Representative: Pizzoli, Antonio

(57) **Abstract**

A fermenter comprising a container (1) which is provided with one or more openings (3, 4) for inserting and/or extracting the product (2) to be fermented and is connected to one or more pneumatic machines (5; 5') so that these machines (5; 5') can suck gas from the top of the container (1) and pump it into the product (2) to be fermented, said pneumatic machines (5; 5') being connected to the inner cavity of the container (1) by means of one or more suction ducts (6) which start from the upper wall and/or portion of the container (1) and one or more delivery ducts (7; 7'; 7") which end in the lower portion and/or in the bottom of the container (1). The present invention relates also to a fermentation process which can be obtained with this fermenter.

## Description

The present invention relates to a fermenter, in particular for must vinification in the wine industry, as well as a fermentation process which can be carried out with this fermenter.

In known fermenters and wine fermentation processes, an almost solid layer, called marc cover, is formed on the product to be fermented, that is the must. Mechanical stirrers can be placed in the container of said fermenters for breaking down this solid layer, in order to improve the final product of fermentation. As a matter of fact, substances which confer the color to the future wine and confer to the same other features which enhance the quality are present in the marc. However these stirrers are not always efficacious, since they may cause a considerable increase of the dregs to the detriment of the quality of wine or may involve only some portions of the marc and not the totality thereof.

The object of the present invention is therefore to provide a fermenter and a fermentation process free from said drawbacks. This object is achieved with a fermenter and a fermentation process whose main features are specified in claims 1 and 14, respectively, while other features are specified in the remaining claims.

Thanks to the suction of the fermentation gases and to the pumping thereof in the product to be fermented, the fermenter and the fermentation process according to the present invention allow an efficacious breaking down of the marc cover without deteriorating the features of the product to be fermented.

Moreover, the fermenter according to the present invention can be easily carried out by applying the pneumatic machines and the relevant ducts to the containers of fermenters which have already been manufactured and/or installed.

According to a particular aspect of the invention, the fermenter can be provided with valves, sensors and/or an electric or electronic control unit for controlling the fermentation processes in an automatic or semi-automatic way, included particular fermentations obtained by taking gas from the outside.

Further advantages and features of the fermenter and of the fermentation process according to the present invention will be clear to those skilled in the art from the following detailed and non-limiting description of some embodiments thereof with reference to the attached drawings wherein:
- figure 1 shows a first front view of a first embodiment of the fermenter;
- figure 2 shows a top view of the fermenter of figure 1;
- figure 3 shows a second front view of the fermenter of figure 1;
- figure 4 shows a third front view of the fermenter of figure 1;
- figure 5 shows a fourth front view of the fermenter of figure 1;
- figure 6 shows a fifth front view of the fermenter of figure 1;

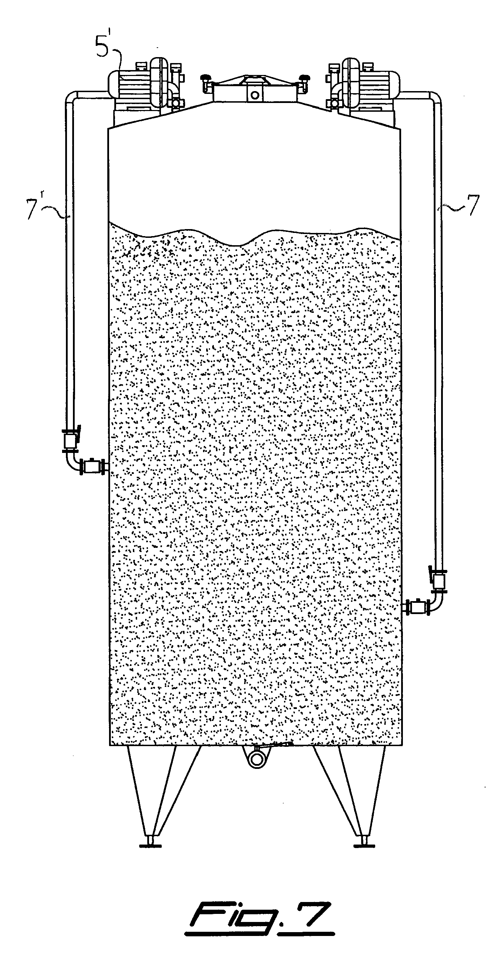

- figure 7 shows a front view of a second embodiment of the fermenter;

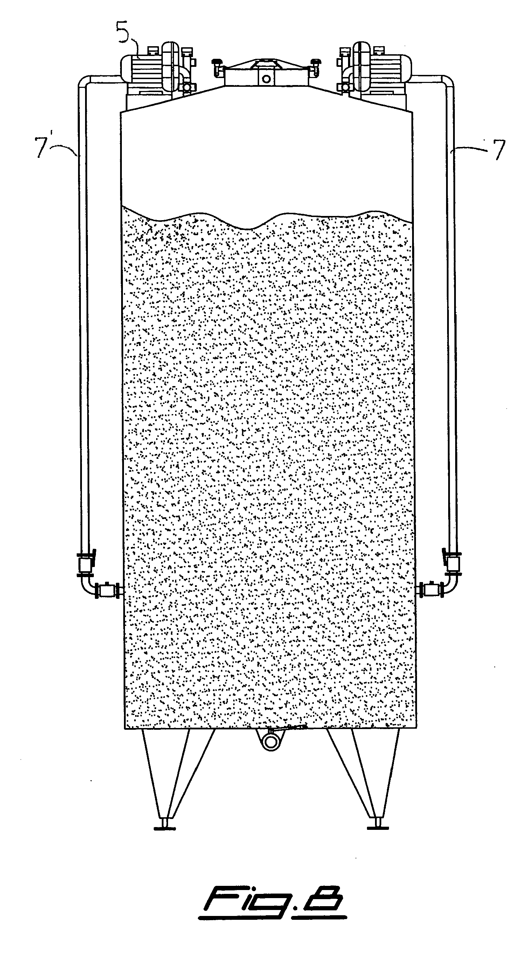

- figure 8 shows a front view of a third embodiment of the fermenter;

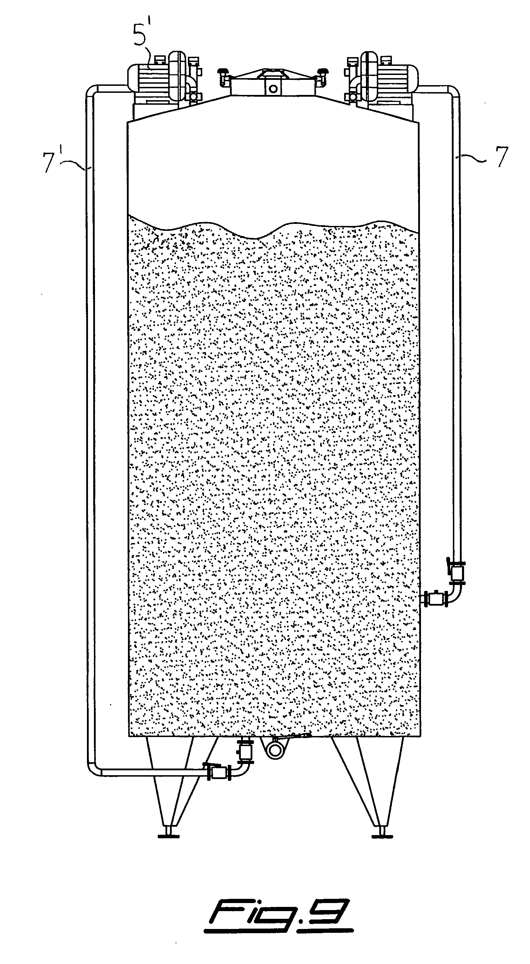

- figure 9 shows a front view of a fourth embodiment of the fermenter;
- figure 10 shows a first front view of a fifth embodiment of the fermenter;
- figure 11 shows a top view of the fermenter of figure 10;
- figure 12 shows a second frontal view of the fermenter of figure 10.

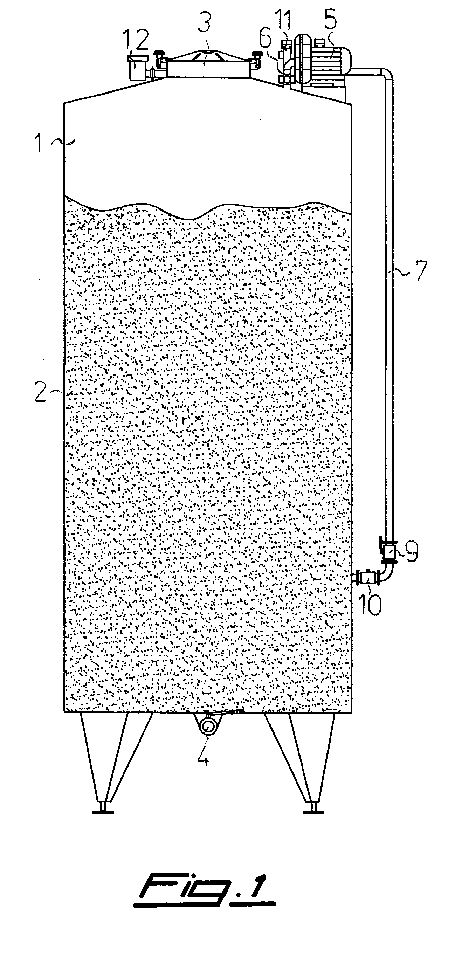

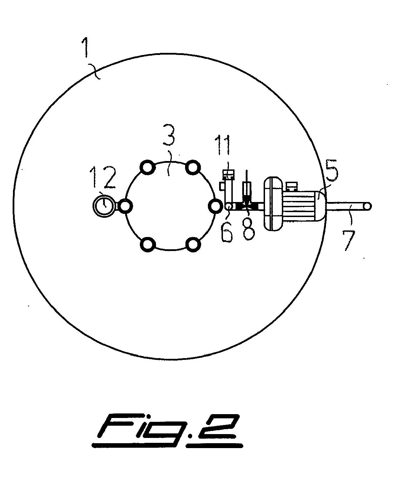

Referring to figures 1 and 2, it is visible that the fermenter according to the present invention comprises in a known way a container 1 which is provided with one or more openings for inserting and/or extracting the product 2 to be fermented into container 1. For example, in the present embodiment container 1 is provided with an upper opening which may be closed by a hermetic lid 3 and be used for inserting product 2, as well as a lower opening which is provided with a valve 4 for discharging the fermented product.

According to the invention, container 1 is suitably connected to at least one pneumatic machine 5, for example a compressor, a blower, a pump or a fan so that this machine can suck gases from the top of container 1 and pump it into the product 2 to be fermented. For this purpose, pneumatic machine 5 is placed on container 1 and is connected with the inner cavity thereof through a suction duct 6 which starts from the upper wall and/or portion of container 1 and a delivery duct 7 which ends in the lower portion and/or in the bottom of container 1. The suction duct 6 is preferably provided with an interception three-way valve 8 so that pneumatic machine 5 can suck gas from inside and/or outside container 1 in adjustable ratios from 0 to 100%. Delivery duct 7 is preferably provided with an adjustable valve 9 for controlling the flow of the gases pumped by pneumatic machine 5 as well as with a non-return valve 10 arranged between container 1 and delivery duct 7 in order to avoid product 2 to be fermented in container 1 from going into duct 7. Container 1 is further connected to a pressure sensor 11 for measuring the pressure in the upper portion thereof, as well as to a safety valve 12 for avoiding the pressure in container 1 to be higher and/or lower than set threshold values. Pneumatic machine 5, three-way valve 8, adjustable valve 9 and/or pressure sensor 11 are preferably connected to an electric or electronic control unit (not visible in the figures) for controlling in an automatic or semi-automatic way the operative steps of the fermentation process of product 2 to be fermented in container 1. For this purpose, three-way valve 8 and/or adjustable valve 9 are electrovalves, while pressure sensor 11 is an electric or electronic sensor which emits a signal variable according to the measured pressure. This control unit is preferably provided with one or more timers for controlling the operative steps of the fermentation process as a function of the elapsed time.

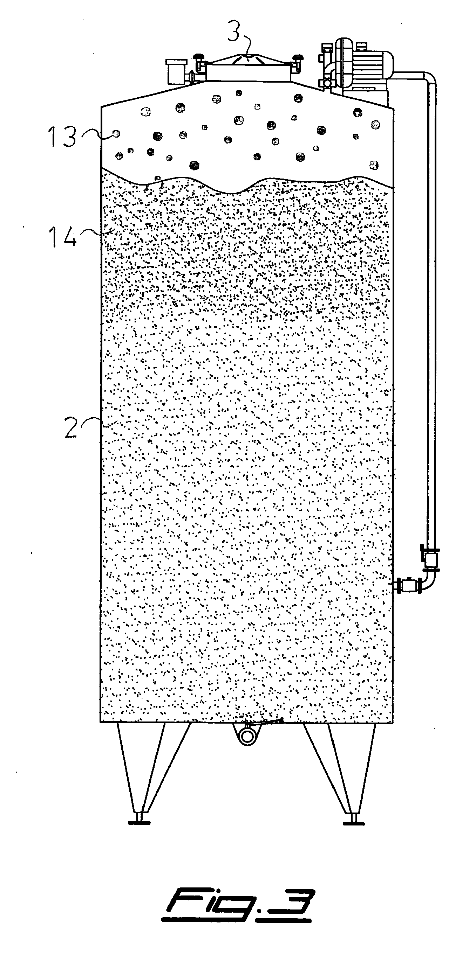

Figure 3 shows a first operative step of the fermentation process according to the present invention, wherein product 2 to be fermented produces fermentation gases 13, mostly carbon dioxide, which gather together in the upper portion of container 1, thus increasing the pressure thereinside since lid 3 is hermetically closed. A denser layer 14 starts to form on product 2 to be fermented.

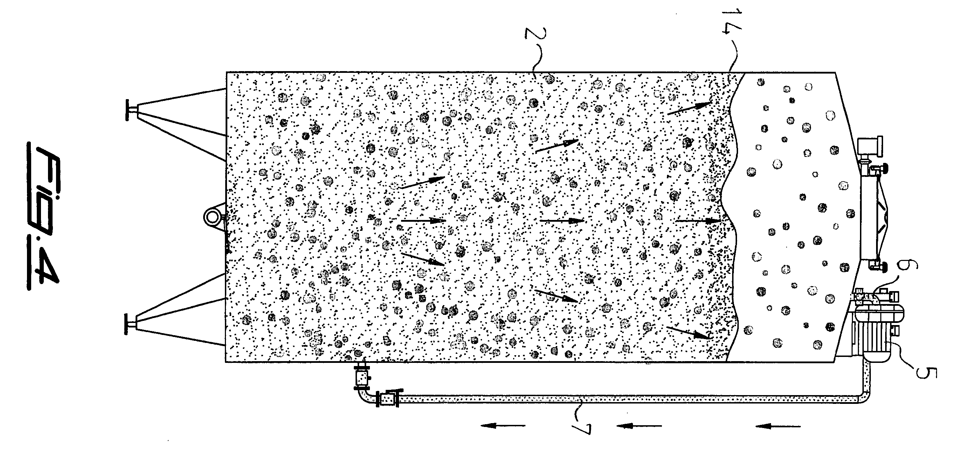

Figure 4 shows a second operative step wherein, when the gas pressure measured by the pressure sensor 11 in container 1 exceed a set threshold value, the control unit starts pneumatic machine 5, which thus sucks the fermentation gas from the suction duct 6 and pump it into product 2 to be fermented through the delivery duct 7, so that the bubbles of this gas, going up inside product 2, break up the denser layer 14, thereby mixing it with the remaining product 2. The arrows indicate the circulating direction of the fermentation gas.

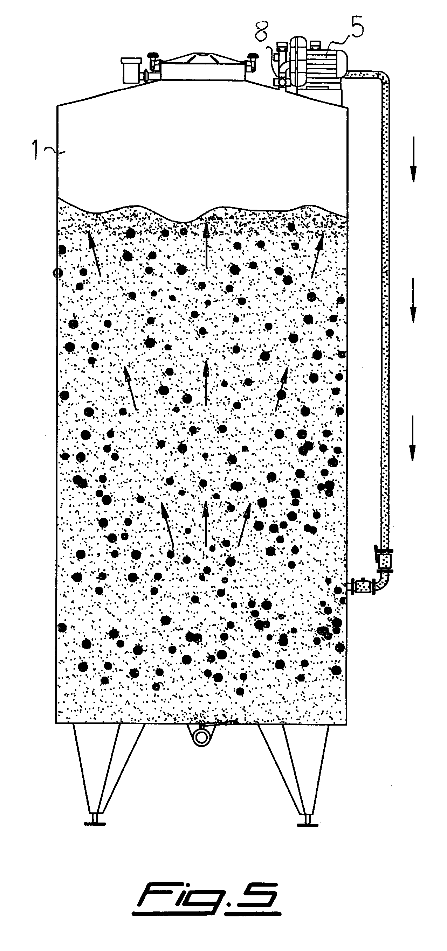

Figure 5 shows a third optional operative step wherein, when the pneumatic machine 5 is working, the control unit operates the three-way valve 8, so that this machine sucks also or only gas from the outside, for example air, and pumps it in container 1 as in the second operative step. If pressure in container 1 is too high, the safety valve 12 discharges a fraction of the gases contained in container 1.

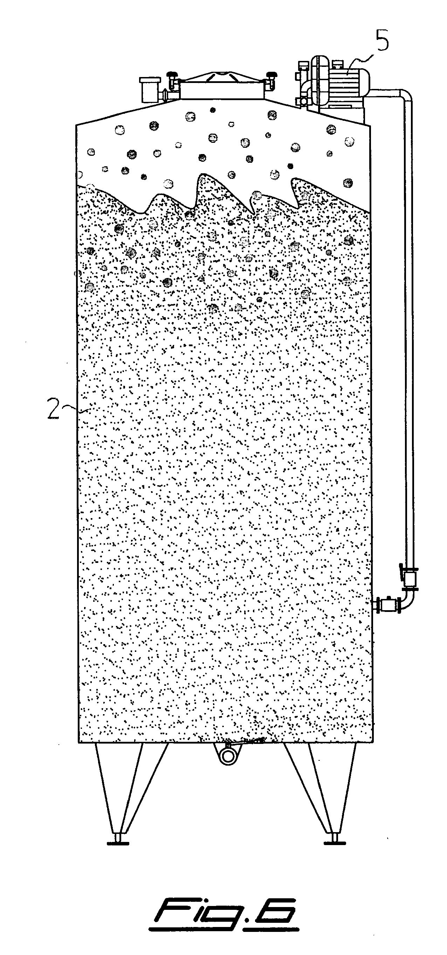

Figure 6 shows that when pneumatic machine 5 is stopped, for example after a period of time programmed in the control unit, product 2 to be fermented is relatively homogeneous, so that a period of static fermentation, which may be interrupted by a new mixing cycle comprising the above described operative steps, starts again.

Figures from 7 to 9 show three alternative embodiments similar to the first embodiment, which comprise a second pneumatic machine 5' connected to container 1 by means of a second delivery duct 7' which ends to a higher, equal or lower level, respectively, than the level of the first delivery duct 7 and is provided with an adjustable valve 9 and a non-return valve 10 as well.

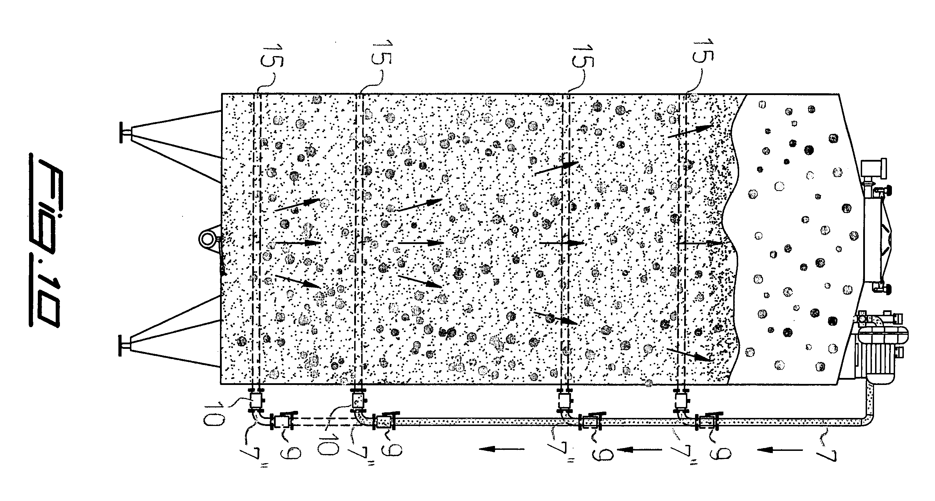

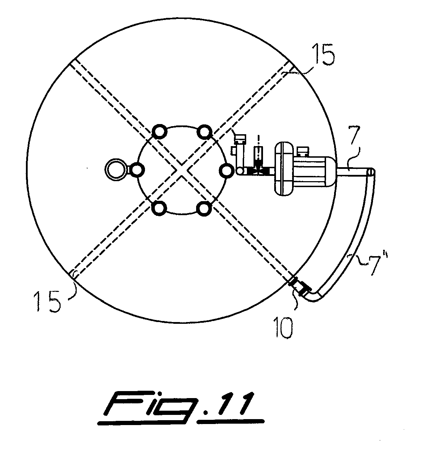

Referring to figures 10 and 11, it is visible that in a fifth embodiment of the invention the delivery duct 7 comprises one or more branches 7" which end in different points of container 1, preferably at different heights and each having an adjustable valve 9 and a non-return valve 10. Moreover, one or more pipes 15 placed in container 1 are connected to delivery duct 7 or to its branches 7" and are provided with lateral holes, in order to distribute into container 1 the gases pumped by pneumatic machine 5. In the present embodiment pipes 15 have branches which form a cross arranged along a substantially horizontal plane in container 1.

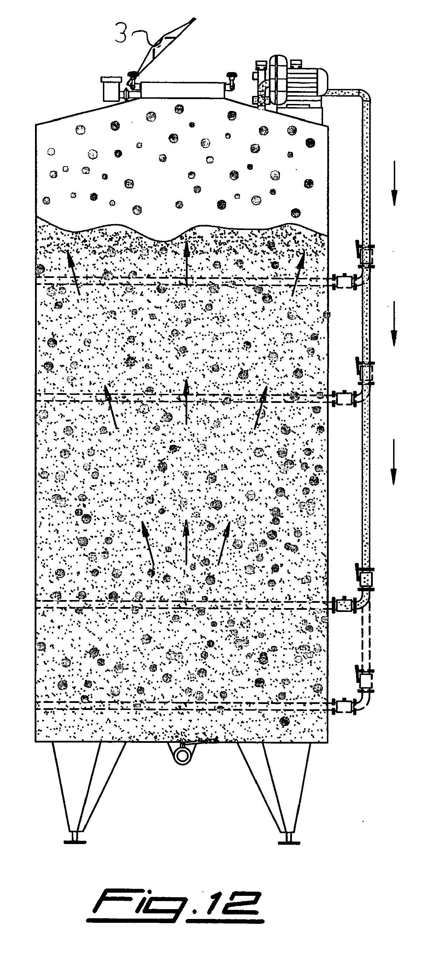

Figure 12 shows finally a further operative step of the fermentation process, wherein lid 3 is open for a fixed period of time, in order to disperse a portion of the fermentation gases and to mix it with the outside air.

## Claims

1. A fermenter comprising a container (1) which is provided with one or more openings (3, 4) for inserting and/or extracting the product (2) to be fermented, **characterized in that** the container (1) is connected to one or more pneumatic machines (5; 5') so that these machines (5; 5') may suck gas from the top of the container (1) and pump it into the product (2) to be fermented, said pneumatic machines (5; 5') being connected to the inner cavity of the container (1) by means of one or more suction ducts (6) which start from the upper wall and/or portion of the container (1) and one or more delivery ducts (7; 7'; 7") which end in the lower portion and/or in the bottom of the container (1).

2. A fermenter according to the previous claim, **characterized in that** the suction ducts (6) are provided with an interception three-way valve (8) so that the pneumatic machines (5, 5') can suck gas from inside and/or outside the container (1) in adjustable ratios.

3. A fermenter according to one of the previous claims, **characterized in that** a second pneumatic machine (5') is connected to the container (1) by means of a second delivery duct (7') which ends to a level higher, equal or lower, respectively, than the first delivery duct (7).

4. A fermenter according to one of the previous claims, **characterized in that** the delivery ducts (7; 7'; 7") comprise one or more branches (7") which end in different points of the container (1).

5. A fermenter according to the previous claim, **characterized in that** said branches (7") end in different points of the container (1) placed at different heights.

6. A fermenter according to one of the previous claims, **characterized in that** one or more pipes (15) placed in the container (1) are connected to a delivery duct (7; 7'; 7") and are provided with lateral holes, in order to distribute into the container (1) the gases pumped by the pneumatic machines (5; 5').

7. A fermenter according to the previous claim, **characterized in that** said pipes (15) have branches which form a cross arranged along a substantially horizontal plane in the container (1).

8. A fermenter according to one of the previous claims, **characterized in that** the delivery ducts (7; 7'; 7") are provided with an adjustable valve (9) for controlling the flow of the gases pumped by the pneumatic machine (5; 5').

9. A fermenter according to one of the previous claims, **characterized in that** the delivery ducts (7; 7'; 7") are provided with a non-return valve (10) arranged between the container (1) and the same ducts (7; 7'; 7") to avoid the product (2) to be fermented from going into these ducts (7; 7'; 7").

10. A fermenter according to one of the previous claims, **characterized in that** the container (1) is connected to a pressure sensor (11) for measuring the pressure in its upper portion.

11. A fermenter according to one of the previous claims, **characterized in that** the container (1) is connected to a safety valve (12) to avoid the pressure in the container (1) from being higher and/or lower than the set threshold values.

12. A fermenter according to one of the previous claims, **characterized in that** the pneumatic machine (5), the three-way valve (8), the adjustable valve (9) and/or the pressure sensor (11) are connected to an electric or electronic control unit for controlling the operative steps of the fermentation process of the product (2) to be fermented in the container (1).

13. A fermenter according to the previous claim, **characterized in that** said control unit is provided with one or more timers for controlling the operative steps of the fermentation process as a function of the elapsed time.

14. A fermentation process, **characterized in that** the fermentation comprises the following operative steps:
- inserting the product (2) to be fermented in a container (1) which can be hermetically closed by at least one lid (3);
- sucking the fermentation gases which gather in the top of the container (1);
- pumping the sucked gases in the product (2) to be fermented.

15. A process according to the previous claim, **characterized in that** gases sucked from outside the container (1) are pumped into the product (2) to be fermented.

16. A process according to claim 14 or 15, **characterized in that** during the fermentation the lid (3) of the container (1) is open for a fixed period of time.

17. A process according to one of the claims 14 to 16, **characterized in that** the gases are pumped into the product (2) to be fermented according to the pressure detected in the container (1) by a pressure sensor (11).

18. A process according to one of the claims 14 to 17, **characterized in that** the gases are pumped into the product (2) to be fermented according to the time measured by a timer of an electric or electronic control unit.
